# EUROPÄISCHE PATENTANMELDUNG

(11) **EP 4 327 965 A1**
(43) Veröffentlichungstag der Anmeldung: **28.02.2024**
(21) Anmeldenummer: 22191934.3
(22) Anmeldetag: 24.08.2022
(51) Int. Cl.: B22F 10/73, B33Y 10/00, B22F 10/64, B22F 10/28, B33Y 40/00, B33Y 80/00

(54) **VERWERTUNG VON METALLPULVER AUS PULVERBASIERTEN ADDITIVEN FERTIGUNGSPROZESSEN**

(71) Anmelder: Siemens Aktiengesellschaft, 80333 München (DE)
(72) Erfinder: Kiener, Christoph, 81369 München (DE)
(74) Vertreter: Siemens Patent Attorneys

(57) **Zusammenfassung**

Die Erfindung betrifft ein Verfahren zum Verwerten von Metallpulver aus pulverbettbasierten additiven Fertigungsprozessen, umfassend die Schritte:
- Sammeln von Metallpulver (20) einer Legierung aus einem Pulverbett und/oder aus Hohlräumen eines Bauteils, das mit dem additiven Fertigungsprozess gefertigt wurde, in einem Behälter (30),
- Sintern des Metallpulvers im Behälter (30), sodass aus dem Metallpulver (20) eine zusammenhängende Struktur (40) entsteht und
- Bereitstellten der Struktur (40) zur weiteren Verarbeitung. Weiterhin betrifft die Erfindung eine Struktur.

## Beschreibung

Die Erfindung betrifft ein Verfahren zum Verwerten von Metallpulver aus pulverbasierten additiven Fertigungsprozessen. Die Erfindung betrifft weiterhin eine Struktur.

Ein derartiges Verfahren kann im industriellen Umfeld in additiven Fertigungsanlagen zum Einsatz kommen.

Metallpulver im additiven Fertigungsumfeld fällt oft in größeren Mengen an, die nicht vorbehaltlos für hochqualitative Produkte im additiven Fertigungsprozess weiterverwendet werden können und wird dementsprechend oftmals als kostenintensiver Sondermüll entsorgt. Oft wird dieser Sondermüll nicht sortenrein hinsichtlich der Legierung entsorgt. Ausschussbauteile gehen oft in die Verschrottung, sind dabei aber gut sichtbar für Dritte, womit ein Geheimschutz derartiger Bauteile nicht gewährleistet werden kann. Auch ist das Einschmelzen von Metallpulver nicht einfach oder gefahrlos möglich, da metallische Pulver oder Stäube dazu neigen zu verbrennen und sich als unerwünschte Schlacken absetzen.

Es ist Aufgabe der Erfindung die Verwertung von Metallpulvern aus pulverbasierten additiven Fertigungsprozessen zu verbessern und zu vereinfachen.

Dazu wird ein Verfahren zum Verwerten von Metallpulver aus pulverbasierten additiven Fertigungsprozessen vorgeschlagen. Das Verfahren umfasst die folgenden Schritte:
- Sammeln von Metallpulver einem metallischen Werkstoff aus einem Pulverbett und/oder aus Hohlräumen eines Bauteils, das mit dem additiven Fertigungsprozess gefertigt wurde, in einem Behälter,
- Sintern des Metallpulvers im Behälter, sodass aus dem Metallpulver eine zusammenhängende Struktur entsteht und
- Bereitstellen der Struktur zur weiteren Verarbeitung.

Die Metallpulver, auch Pulver, bestehen oftmals aus hochwertigen und teuren Legierungen.

Das Pulverbett von additiven Fertigungsanlagen wird zur Entnahme der mit dem additiven Fertigungsverfahren gefertigten Bauteilen von Pulver befreit. Dies geschieht oft mit Staubsaugern oder ähnlichen Pulverentnahmevorrichtungen. Das Pulver kann dementsprechend sortenrein, also aus einer einzigen Legierung in den Behälter gefüllt werden. Je nach Größe des Behälters kann das Pulver dort gesammelt werden, bis ein Versintern des Pulvers ökonomisch sinnvoll erscheint.

Das Sintern kann dabei in einem Ofen bei für den Metallischen Werkstoff üblichen Sintertemperaturen durchgeführt werden. Weiterhin ist ein induktives Erhitzen des Behälters und des Pulvers zum Sintern denkbar.

Die so entstehende Struktur kann im Gegensatz zum Pulver gut und ohne weitere Vorbehandlung eingeschmolzen und z.B. direkt wieder zu Pulver verarbeitet werden.

In einer weiteren Ausführungsform besteht die Struktur aus einer, insbesondere genau einer, definierten Legierung. Diese definierte Legierung kann dabei z.B. eine Legierung aus einer der folgenden Kategorien sein, Superlegierungen, Korrosionsbeständige Legierung, Edelstähle, Sonderedelstähle, Kobalt-Chrom-Legierungen, Nickelbasislegierungen. Weiterhin kann beispielsweise Metallpulver aus Legierungen aus der ISO 5832 mit dem vorliegenden Verfahren aufbereitet werden darunter unter anderem:
ISO 5832-2 Unlegiertes Titan
ISO 5832-3 Titan aluminium-6 Vanadium-4 Knetlegierung
ISO 5832-4 Kobalt-Chrom-Molybdän-Gusslegierung
ISO 5832-12 Kobalt-Chrom-Molybdän-Schmiedelegierung

In einer weiteren Ausführungsform werden beim Sintern bereits durch den additiven Fertigungsprozess verfestigte Anteile mit dem Pulver versintert. Hier können beispielsweise fehlerhafte Bauteile oder nur teilweise gefertigte Bauteile mit in den Behälter gegeben und dementsprechend mit dem Restpulver versintert werden. Dies hat den Vorteil, dass der Geheimschutz bezüglich sensibler Bauteile gewahrt werden kann. Vorteilhafterweise ist der Behälter von der Form seines Innenraums an das verworfene Bauteil angepasst, sodass möglichst wenig Energieaufwand zum versintern gebraucht wird. Verbleibende Leervolumina können mit Pulver aufgefüllt werden. Vorteilhaft ist es auch, wenn die Bauteile vor dem Einbringen in den Behälter gereinigt werden. Insbesondere wären die Schritte Reinigen von Kühlschmiermitteln durch geeignete Lösungs- / Reinigungsmittel und/oder Entfernen von Erodierresten vorteilhaft.

In einer weiteren Ausführungsform besteht der Behälter aus demselben metallischen Werkstoff, wie das Metallpulver, das in den Behälter gefüllt wird. Der Behälter wird dabei beim Sintern Teil der Struktur. In anderen Worten wird der Behälter mit dem Metallpulver versintert.

Ergänzend oder alternativ kann die Innenwand des Behälters konstruktiv so ausgestaltet sein, dass ein Versintern des Metallpulvers mit dem Behälter weniger stark ausgeprägt ist, wie das Versintern des Metallpulvers selbst. Dementsprechend ist ein Entnehmen der Struktur aus dem Behälter nach dem Versintern bzw. nach dem Sinterprozess möglich.

In einer weiteren Ausführungsform besteht der Behälter aus Metallpulver, das zumindest drei, insbesondere fünf oder zehn thermische Zyklen durchlebt hat. Derartig zykliertes Pulver wird in der Regel nicht mehr dazu verwendet, um Bauteile nach hohen Qualitätsstandard zu fertigen. Das Fertigen eines Behälters, der nur zum Einschmelzen und Sintern dient, ist problemlos möglich. So kann ein Teil des Pulvers bereits sinnvoll zum Einsatz kommen. Mit modernen Produktionssteuerungssystemen lässt sich die Zykluszahl von Pulvern nachverfolgen und dementsprechend Pulver auswählen. Ein thermischer Zyklus ist dabei als ein in sich abgeschlossener Fertigungsprozess in einer Anlage für ein oder mehrere Bauteile zu verstehen. In anderen Worten erhöht sich die Anzahl der thermischen Zyklen pro Einsatz im Pulverbett um 1.

In einer weiteren Ausführungsform weist das Metallpulver

In einer weiteren Ausführungsform weist das Metallpulver zumindest ein oder mehrere der folgenden Kategorien von Pulver auf: Überkorn aus Siebfraktionen; pyrogene Metallpulverrückstände, z.B. in Filtern; Pulverreste in Staubsaugerschlämmen z. B. von Ex-Nass-Staubsaugern; Restpulverbestände, deren Lagerzeit beispielsweise überschritten wurde Pulverreste aus Entpulverungsanlagen und/oder nicht-spezifikationsgerechte Korngrößen (Fehlgrößen). Dies hat den Vorteil, dass unterschiedliche Kategorien von Pulvern zu einer Struktur versintert werden können, die dann wiederum einem weiteren Prozess zur Verfügung gestellt werden können.

In einer weiteren Ausführungsform umfasst das Verfahren vor dem Sintern den Schritt Pyrolyse von organischen Rückständen am Pulver. Aus diversen Prozessschritten können sich am Pulver organische Rückstände wie beispielsweise Fasern / Stäube / Verunreinigungen oder ähnliches befinden. Derartige organische Rückstände vermindern die Qualität des Pulvers und der Struktur und können in einem Schritt vor dem Sintern pyrolysiert werden. Die Qualität der Struktur wird so verbessert.

In einer weiteren Ausführungsform wird der Behälter zum Sintern gemeinsam mit Bauteilen wärmebehandelt, die mittels des additiven Fertigungsprozesses gefertigt wurden. In anderen Worten werden die Gutteile des additiven Fertigungsprozesses einer Wärmebehandlung unterzogen, wobei der Behälter mit dem darin befindlichen Metallpulver in denselben Wärmebehandlungsprozess zum Sintern gegeben wird. Dies ist möglich, da die Temperaturbereiche der Wärmenachbehandlung ausreichend sind, um eine Versinterung des Metallpulvers zu erreichen. In der Regel ist der Temperaturbereich der für die thermische Nachbehandlung der jeweiligen Bauteile aus den jeweiligen Legierungen gut geeignet, um eine Versinterung des Metallpulvers im Behälter herbeizuführen. So kann das Verfahren energieeffizient durchgeführt werden.

Der Behälter bzw. die Struktur kann im Allgemeinen nach dem Sintern eingeschmolzen werden. Dies kann in einem für die Metallverarbeitung und Pulvererzeugung spezialisierten Betrieb geschehen, da die Struktur einfach und vor allem sicher transportierbar ist.

In einer weiteren Ausführungsform wird der Behälter auf einer Bauplatte aufgebaut, die aus demselben metallischen Werkstoff besteht, wie der Behälter. So muss der Behälter nicht von der Bauplatte getrennt werden und kann direkt mit der Bauplatte in die Verwertung gegeben werden.

Die Aufgabe wird weiterhin durch eine Struktur gelöst, die einen aus einer Legierung additiv gefertigten Behälter aufweist, wobei ein Innenraum des Behälters ein versintertes Metallpulver aus der Legierung aufweist. Die derartig entstehende Struktur lässt sich dann zum weiteren Recycling optimal weiterverwenden, da das teilweise als Gefahrgut geltende Pulver nun zu einem Festkörper versintert ist und ohne die sonst nötigen Schutzmaßnahmen handhabbar ist.

In einer weiteren Ausführungsform ist das Metallpulver mit der Innenwand des Behälters versintert. Dies kann nur eine speziell ausgestaltete Innenwand begünstigt werden, die eine entsprechende Oberflächenvergrößerung für das Pulver aufweist.

In einer weiteren Ausführungsform weist die Struktur einen Deckel auf, der den Innenraum des Behälters verschließt, wobei der Deckel mit dem Behälter versintert ist. So ist die Struktur in den Folgeprozessen besser handhabbar, da alle Teile miteinander versintert sind. In einer weiteren Ausführungsform ist das Metallpulver mit dem Deckel versintert.

Im Folgenden wird die Erfindung anhand der in den Figuren dargestellten Ausführungsbeispiele näher beschrieben und erläutert. Es zeigen:
- FIG 1: schematisch eine additive Fertigungsanlage, die auf einem Pulverbett basiert und
- FIG 2: beispielhaft einen Querschnitt durch einen Behälter, der Teil einer Struktur ist.

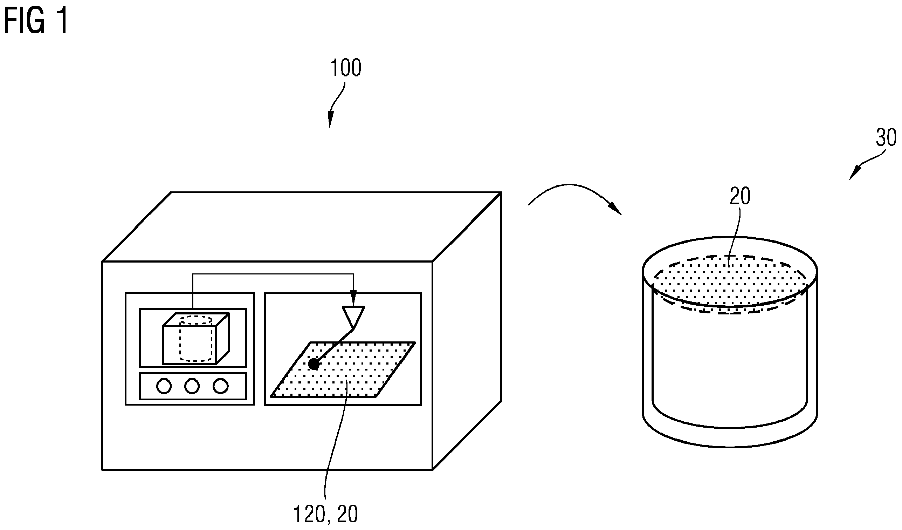

FIG 1 zeigt schematisch eine additive Fertigungsanlage 100, die auf einem Pulverbett 120 basiert. Im Pulverbett 120 ist Metallpulver 20 angeordnet, das mit einem Energiestrahl beispielsweise einem Laser oder Elektronenstrahl selektiv verfestigt werden kann. Da im Pulverbett 120 in der Regel mehr Pulver 20 eingebracht wird, als durch die Anlage 100 verfestigt wird, bleibt hier Metallpulver übrig, das in einem Behälter 30 gesammelt werden kann.

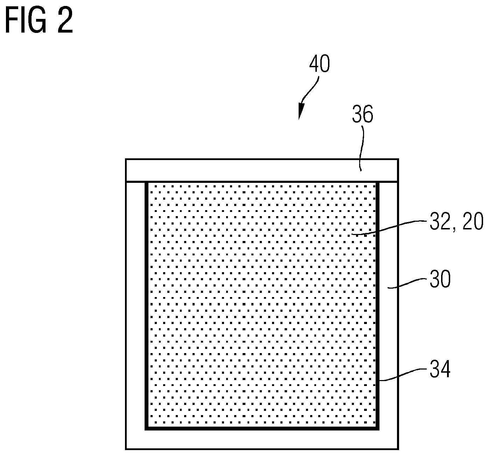

FIG 2 zeigt eine Struktur 40, die einen Behälter 30 mit einem Deckel 36 aufweist, wobei der Deckel 36 den Behälter 30 verschließt. Der Behälter 30 weist dabei eine Innenwand 34 auf, die eine Ausgestaltung gemäß einer der Ausführungsformen aufweisen kann, insbesondere so, dass das Pulver 20 besonders gut mit der Innenwand 34 versintert. Alternativ kann die Innenwand 34 so ausgestaltet sein, dass das Pulver 20 nicht oder nur leicht mit der Innenwand 34 versintert, sodass nur das zu einer Struktur versinterte Metallpulver 20 aus dem Behälter entnommen werden kann. Ein Innenraum 32 des Behälters 30 ist dabei mit dem Metallpulver 20 gefüllt, wobei das Metallpulver 20 bereits versintert ist. Die Struktur 40 kann so beispielsweise eingeschmolzen werden, ohne dass die Gefahr eines Verbrennens des Metallpulvers der gar von ungewollten exothermen Reaktionen des Pulvers besteht.

Zusammenfassend betrifft die Erfindung ein Verfahren zum Verwerten von Metallpulver aus pulverbettbasierten additiven Fertigungsprozessen, umfassend die Schritte:
- Sammeln von Metallpulver (20) einer Legierung aus einem Pulverbett und/oder aus Hohlräumen eines Bauteils, das mit dem additiven Fertigungsprozess gefertigt wurde, in einem Behälter (30),
- Sintern des Metallpulvers im Behälter (30), sodass aus dem Metallpulver (20) eine zusammenhängende Struktur (40) entsteht und
- Bereitstellten der Struktur (40) zur weiteren Verarbeitung. Weiterhin betrifft die Erfindung eine Struktur.

### Bezugszeichen

- 20: Metallpulver
- 30: Behälter
- 32: Innenraum des Behälters
- 34: Innenwand des Behälters
- 36: Deckel
- 40: Struktur
- 100: Anlage zur pulverbettbasierten additiven Fertigung
- 120: Pulverbett

## Patentansprüche

1. Verfahren zum Verwerten von Metallpulver aus pulverbettbasierten additiven Fertigungsprozessen, umfassend die Schritte:
- Sammeln von Metallpulver (20) aus einem metallischen Werkstoff aus einem Pulverbett und/oder aus Hohlräumen eines Bauteils, das mit dem additiven Fertigungsprozess gefertigt wurde, in einem Behälter (30),
- Sintern des Metallpulvers im Behälter (30), sodass aus dem Metallpulver (20) eine zusammenhängende Struktur (40) entsteht und
- Bereitstellten der Struktur (40) zur weiteren Verarbeitung.

2. Verfahren nach Anspruch 1, wobei die Struktur (40) aus Metallpulver (20) aus genau einer Legierung aufweist.

3. Verfahren nach Anspruch 1 oder 2, wobei beim Sintern durch den additiven Fertigungsprozess verfestigte Anteile mit dem Pulver versintert werden.

4. Verfahren nach einem der vorhergehenden Ansprüche, wobei der Behälter aus demselben metallischen Werkstoff besteht, wie das Metallpulver, wobei der Behälter durch das Sintern Teil der Struktur wird.

5. Verfahren nach einem der vorhergehenden Ansprüche, wobei der Behälter (30) aus Metallpulver (20) aus der Legierung besteht, dass zumindest drei thermische Zyklen durchlebt hat.

6. Verfahren nach einem der vorhergehenden Ansprüche, wobei der Behälter aus Metallpulver (30) besteht, das aus verschiedenen Chargen kombiniert wurde.

7. Verfahren nach einem der vorhergehenden Ansprüche, wobei das Metallpulver (20) zumindest ein oder mehrere der folgenden Kategorien von Pulver aufweist: Überkorn aus Siebfraktionen; pyrogene Metallpulverrückstände; Pulverreste in Staubsaugerschlämmen; Rest-Pulverbestände; Pulverreste aus Entpulverungsanlagen; nicht-spezifikationsgerechte Korngrößen.

8. Verfahren nach einem der vorhergehenden Ansprüche, umfassend vor dem Sintern den Schritt:
- Pyrolyse von organischen Rückständen am Pulver.

9. Verfahren nach einem der vorhergehenden Ansprüche, wobei der Behälter (30) zum Sintern gemeinsam mit Bauteilen wärmebehandelt wird, die mittels des additiven Fertigungsprozesses gefertigt wurden.

10. Verfahren nach einem der vorhergehenden Ansprüche, wobei der Behälter (30) auf einer Bauplatte aufgebaut wird, die aus demselben metallischen Werkstoff besteht, wie der Behälter (30) .

11. Struktur (40), aufweisend einen aus einer Legierung additiv gefertigten Behälter (30), wobei ein Innenraum (32) des Behälters (30) versintertes Metallpulver (20) aus der Legierung aufweist.

12. Struktur (40) nach Anspruch 11, wobei das Metallpulver (20) mit der Innenwand (34) versintert ist.

13. Struktur (40) nach Anspruch 11 oder 12, wobei der Behälter einen Deckel (36) aufweist, der mit dem Behälter versintert ist.

14. Struktur (40) nach Anspruch 13, wobei das Metallpulver (20) mit dem Deckel versintert ist.
